# EUROPEAN PATENT APPLICATION

(11) **EP 4 790 874 A1**
(43) Date of publication of application: **12.08.2026**
(21) Application number: 23954786.2
(22) Date of filing: 05.10.2023
(51) Int. Cl.: H02K 1/14, H02K 3/18

(54) **STATOR AND METHOD FOR ASSEMBLING STATOR**

(71) Applicant: KAWASAKI JUKOGYO KABUSHIKI KAISHA, Kobe-shi, Hyogo 650-8670 (JP)
(72) Inventor: SHIBAYAMA, Yoshiyasu, Hyogo 650-8670 (JP); IMAMURA, Keigo, Hyogo 650-8670 (JP); UETA, Kazuki, Hyogo 650-8670 (JP)
(74) Representative: Bals & Vogel Patentanwälte PartGmbB
(86) International application number: PCT/JP2023/036384
(87) International publication number: WO 2025/074575

(57) **Abstract**

A stator (1) according to one embodiment includes: a stator core (2) including N (N is an even number) teeth (21); and N coils (4) through which the respective teeth (21) extend. The stator core (2) is divided into N segments (3) along division lines (11) that extend through the respective teeth (21). Each segment (3) includes: an arc-shaped yoke portion (31); a first tooth portion (32) and a second tooth portion (33) that protrude inward in a radial direction from both ends of the yoke portion (31), respectively; and a rib (34) that extends from a tip of the first tooth portion (32) to a side opposite to the second tooth portion (33), the rib (34) covering a part of the corresponding coil (4).

## Description

### Technical Field

The present disclosure relates to a stator of an electric motor and to a method of assembling the stator.

### Background Art

Conventionally, in order to improve the efficiency of an electric motor, a technique has been known in which, instead of forming coils by winding a strand around each tooth of a stator core, air-core coils are formed in advance and the air-core coils are mounted on the teeth such that the teeth extend through the air-core coils. For example, Patent Literature 1 discloses a stator 100 as shown in FIG. 5. In the stator 100, a stator core 110 including N teeth 120 is divided into N segments 130 along division lines that extend through the respective teeth 120.

To be more specific, the segments 130 include first divided bodies 140 and second divided bodies 150, which have different shapes from each other and which are located alternately. Each first divided body 140 includes: an arc-shaped first yoke portion 141; and a first tooth portion 142 and a first tooth portion 143, which protrude inward in the radial direction from both ends of the first yoke portion 141, respectively. In Patent Literature 1, the first yoke portion 141 is referred to as a "first split core back", and the first tooth portion 142 and the first tooth portion 143 are referred to as "first split teeth".

Similarly, each second divided body 150 includes: an arc-shaped second yoke portion 151; and a second tooth portion 152 and a second tooth portion 153, which protrude inward in the radial direction from both ends of the second yoke portion 151. In Patent Literature 1, the second yoke portion 151 is referred to as a "second split core back", and the second tooth portion 152 and the second tooth portion 153 are referred to as "second split teeth".

The first tooth portion 142 of each first divided body 140, together with the second tooth portion 153 of one adjacent second divided body 150, forms a tooth 120; and the first tooth portion 143 of each first divided body 140, together with the second tooth portion 152 of the other adjacent second divided body 150 on the opposite side, forms a tooth 120. All of the teeth 120 extend through respective coils 160.

In the stator 100 of Patent Literature 1, an umbrella 144 extends from the tip of one first tooth portion 143 of each first divided body 140 toward the other first tooth portion 142 thereof. A gap between the umbrella 144 and the first tooth portion 142 is set to be greater than the layer thickness of the coil 160 to enable mounting of the coil 160 on the first tooth portion 142 such that the first tooth portion 142 extends through the coil 160. The first tooth portion 143 with the umbrella 144 extending from the tip thereof and the second tooth portion adjacent to the first tooth portion 143 form the tooth 120 extending through the coil 160, and a part of this coil 160 is covered by the umbrella 144 from the inner side of the stator 100 in the radial direction.

### Citation List

### Patent Literature

PTL 1: Japanese Laid-Open Patent Application Publication No. 2021-136726

### Summary of Invention

### Technical Problem

However, in the stator 100 of Patent Literature 1, only the first divided bodies 140 include the respective umbrellas 144. Accordingly, the coil 160 through which the tooth 120 that is formed by the first tooth portion 142, with no umbrella 144 thereon, of the first divided body 140 and the second tooth portion 153 of the second divided body 150 extends, is not covered from the inner side of the stator 100 in the radial direction.

In view of the above, an object of the present disclosure is to provide a stator that makes it possible to cover all the coils from the inner side of the stator in the radial direction and to provide a method of assembling the stator.

### Solution to Problem

One aspect of the present disclosure provides a stator including: a stator core including N (N is an even number) teeth; and N coils through which the respective teeth extend, wherein the stator core is divided into N segments along division lines that extend through the respective teeth, and each segment includes: an arc-shaped yoke portion; a first tooth portion and a second tooth portion that protrude inward in a radial direction from both ends of the yoke portion, respectively; and a rib that extends from a tip of the first tooth portion to a side opposite to the second tooth portion, the rib covering a part of the coil through which the tooth that is formed by the first tooth portion of the segment and the second tooth portion of an adjacent segment extends.

Another aspect of the present disclosure provides a method of assembling a stator, the stator including: a stator core including N (N is an even number) teeth; and N coils through which the respective teeth extend, the method including preparing air-core coils as the respective coils, wherein the stator core is divided into N segments along division lines that extend through the respective teeth, and each segment includes: an arc-shaped yoke portion; a first tooth portion and a second tooth portion that protrude inward in a radial direction from both ends of the yoke portion, respectively; and a rib that extends from a tip of the first tooth portion to a side opposite to the second tooth portion, the method further including: mounting the coils on the respective first tooth portions of the segments, such that the first tooth portions extend through the respective coils, to form N coil-holding segments; coupling a half of the coil-holding segments together and another half of the coil-holding segments together to form two stator half bodies, wherein for each half of the coil-holding segments, to couple the coil-holding segments together, in each coil-holding segment, the coil is brought into contact with a surface of the first tooth portion on the second tooth portion side to form a gap between an inner side surface of the coil and a surface of the first tooth portion on a side opposite to the second tooth portion, and the second tooth portion of another coil-holding segment is inserted into the gap; and coupling the two stator half bodies together, wherein in each of the coil-holding segments positioned on one ends of the two stator half bodies, into the gap between the inner side surface of the coil and the surface of the first tooth portion on the side opposite to the second tooth portion, the second tooth portion of a corresponding one of the coil-holding segments positioned on the other ends of the two stator half bodies is inserted.

### Advantageous Effects of Invention

The present disclosure provides a stator that makes it possible to cover all the coils from the inner side of the stator in the radial direction and a method of assembling the stator.

### Brief Description of Drawings

[FIG. 1] FIG. 1 is a sectional view of a stator according to one embodiment.
[FIG. 2] FIG. 2 is an enlarged view showing one segment of a stator core and one coil.
[FIG. 3] FIGS. 3A to 3E show state transition when mounting one coil on a first tooth portion of one segment such that the first tooth portion extends through the one coil.
[FIG. 4] FIG. 4 illustrates a method of assembling the stator.

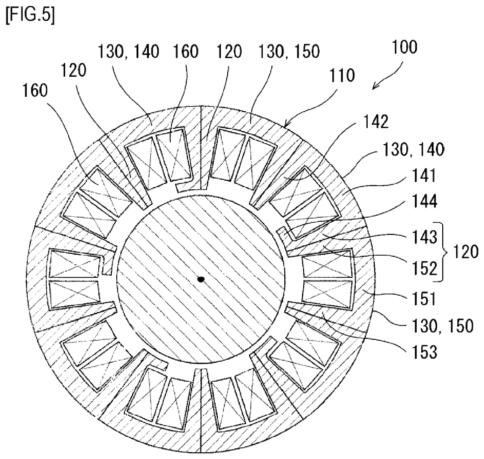

[FIG. 5] FIG. 5 is a sectional view of a conventional stator.

### Description of Embodiments

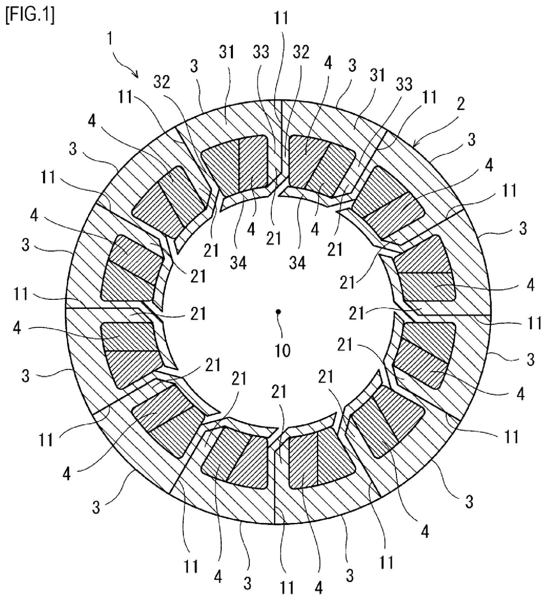

FIG. 1 shows a stator 1 according to one embodiment. The stator 1 is hollow, and a rotor is located inside the stator 1. The stator 1 and the rotor, together with a rotational shaft penetrating the rotor, forms an electric motor.

The stator 1 includes: a stator core 2 including N (N is an even number) teeth 21; and N coils 4, through which the respective teeth 21 extend. In the present embodiment, N = 12. Alternatively, N may be a different number, such as 4, 6, 8, 10, or 14. An insulator may be interposed between the stator core 2 and each coil 4.

In the present embodiment, the teeth 21 are straight teeth, and each tooth 21 includes a pair of parallel side surfaces. Accordingly, between the teeth 21, there are slots each having a sector sectional shape.

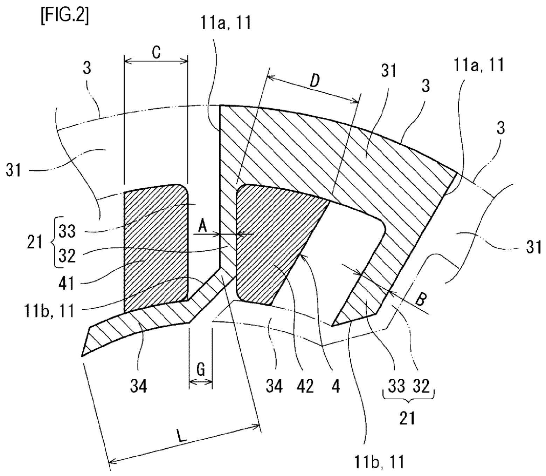

The stator core 2 is divided into N segments 3 along division lines 11, which extend through the respective teeth 21 The division lines 11 extend radially from a center axis 10 of the stator 1. In the present embodiment, at the tip portion of each tooth 21, the division line 11 is bent so as to extend obliquely inward in the radial direction and reach the side surface of the tooth 21. That is, as shown in FIG. 2, each division line 11 includes: a radial-direction extending portion 11a, which is parallel to the radial direction with respect to the center axis 10 of the stator 1; and an inclined portion 11b, which is positioned inward of the radial-direction extending portion 11a in the radial direction.

Each segment 3 may have a structure in which multiple annular electromagnetic steel plates or amorphous thin strips are stacked in the axial direction of the stator 1, or may be entirely made of soft magnetic powder.

As shown in FIG. 2, each segment 3 includes: an arc-shaped yoke portion 31; and a first tooth portion 32 and a second tooth portion 33, which protrude inward in the radial direction from both ends of the yoke portion 31, respectively. The first tooth portion 32 forms, together with the second tooth portion 33 of one adjacent segment 3, a tooth 21; and the second tooth portion 33 forms, together with the first tooth portion 32 of the other adjacent segment 3 on the opposite side, forms a tooth 21.

Accordingly, when seen from one coil 4, the inner side surface of the coil 4 is in contact with the first tooth portion 32 and the second tooth portion 33 of the segments 3 adjacent to each other, and the outer end surface of the coil 4 is in contact with both of the yoke portions 31 of the segments 3 adjacent to each other.

In the present embodiment, the aforementioned radial-direction extending portion 11a of the division line 11 extends through a position that is shifted from the center of the tooth 21. Accordingly, a width A of the first tooth portion 32 is less than a width B of the second tooth portion 33. For example, A : B is within a range from 1 : 1.5 to 1 : 4.5.

Each segment 3 further includes a rib 34, which extends from the tip of the first tooth portion 32 to a side opposite to the second tooth portion 33. In other words, the rib 34 is supported by the first tooth portion 32. The rib 34 covers a part of the coil 4 through which the tooth 21 that is formed by the first tooth portion 32 supporting the rib 34 and the second tooth portion 33 of the adjacent segment 3 extends.

The rib 34 includes a root portion that covers the tip surface of the second tooth portion 33. In the present embodiment, the root portion of the rib 34 is inclined along the inclined portion 11b of the division line 11, and the remaining portion of the rib 34 other than the root portion is arc-shaped with respect to the center axis 10 of the stator 1. The root portion of the rib 34 forms, together with the first tooth portion 32 and the second tooth portion 33, the tooth 21. Alternatively, the length of the first tooth portion 32 may be made greater, and the rib 34 may be bent from the first tooth portion 32 at 90 degrees to be arc-shaped over its entire length.

In the present embodiment, in a section plane taken in a direction orthogonal to the axial direction of the stator 1, the cross section of a covered portion 41 of each coil 4, the covered portion 41 being a portion in contact with the second tooth portion 33 and being covered by the rib 34, and the cross section of an uncovered portion 42 of each coil 4, the uncovered portion 42 being a portion in contact with the first tooth portion 32, have the same area while having different shapes from each other. The term "same area" herein encompasses not only a case where both areas are exactly equal to each other but also a case where the areas are substantially equal to each other (for example, a case where a smaller area is 90% or greater of a larger area).

Specifically, the cross section of the covered portion 41 has a substantially rectangular shape. On the other hand, the cross section of the uncovered portion 42 has a trapezoidal shape such that the width of the cross section of the uncovered portion 42 in the circumferential direction about the center axis 10 of the stator 1 increases toward the yoke portion 31. Specifically, the outer side surface of the covered portion 41 is parallel to the side surface of the tooth 21 on the second tooth portion 33 side, whereas the outer side surface of the uncovered portion 42 is inclined relative to the side surface of the tooth 21 on the first tooth portion 32 side. As a result of the cross section of the uncovered portion 42 having such a trapezoidal shape, the ratio of occupancy by the coils 4 in the slots between the teeth 21, the slots each having a sector cross-sectional shape, can be increased.

In the present embodiment, a length L of the rib 34 in the circumferential direction about the center axis 10 of the stator 1 is greater than a width C of the covered portion 41 on the rib 34 side. In the present embodiment, since the cross section of the covered portion 41 has a substantially rectangular shape as mentioned above, the width of the covered portion 41 on the rib 34 side and the width of the covered portion 41 on the yoke portion 31 side are equal to each other. Further, in the present embodiment, a gap G between the ribs 34 of the respective adjacent segments 3 is less than a width D of the uncovered portion 42 on the yoke portion 31 side.

As described above, in the stator 1 of the present embodiment, each segment 3 includes the rib 34, which extends from the tip of the first tooth portion 32 to the side opposite to the second tooth portion 33. This makes it possible to cover all the coils 4 from the inner side of the stator 1 in the radial direction.

Further, in the present embodiment, in a section plane taken in a direction orthogonal to the axial direction of the stator 1, the cross section of the covered portion 41 and the cross section of the uncovered portion 42 of each coil 4 have the same area while having different shapes from each other, and the width A of the first tooth portion 32 is less than the width B of the second tooth portion 33. Therefore, in the case of assembling the stator 1 by mounting the air-core coils 4 on the respective teeth 21 such that the teeth 21 extend through the respective air-core coils 4, the cross-sectional area of each coil 4 can be increased. As a result of the increase in the cross-sectional area of each coil 4, the resistance value of each coil 4 is reduced, which makes it possible to improve motor efficiency. This advantageous effect can be obtained even with only one of the following configurations: the configuration in which, in a section plane taken in a direction orthogonal to the axial direction of the stator 1, the cross section of the covered portion 41 and the cross section of the uncovered portion 42 of each coil 4 have the same area while having different shapes from each other; and the configuration in which the width A of the first tooth portion 32 is less than the width B of the second tooth portion 33.

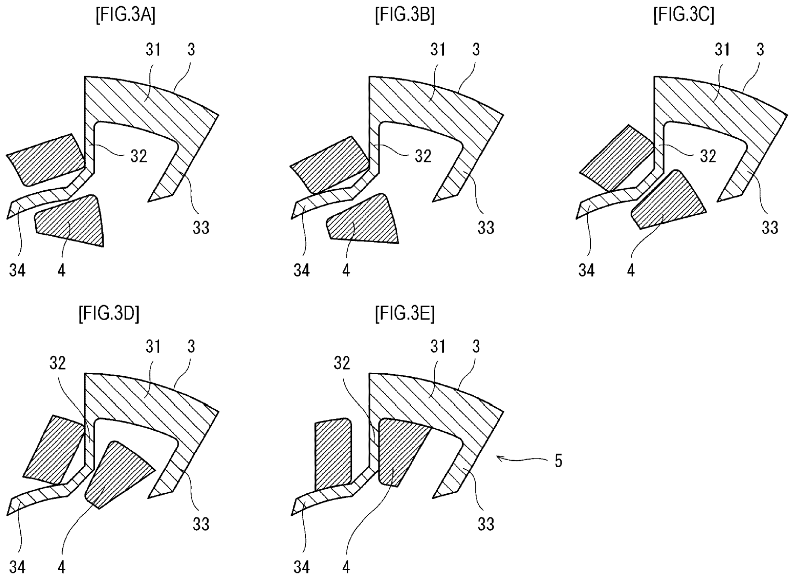

Next, a method of assembling the stator 1 is described. First, N air-core coils are prepared as the coils 4. The air-core coils 4 each configured as shown in FIG. 2, in which the cross section of the covered portion 41 and the cross section of the uncovered portion 42 are different from each other, can be formed by various methods. Next, in a manner as shown in FIGS. 3A to 3E, the coils 4 are mounted on the respective first tooth portions 32 of the N segments 3, such that the first tooth portions 32 extend through the respective coils 4, to form N coil-holding segments 5.

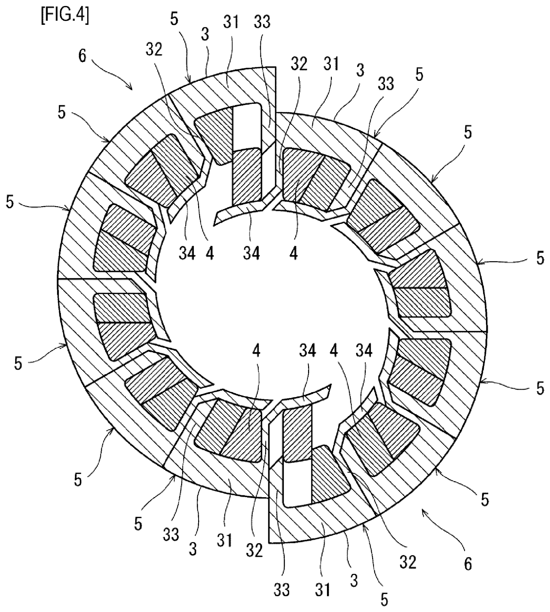

Thereafter, as shown in FIG. 4, a half of the coil-holding segments 5 are coupled together and another half of the coil-holding segments 5 are coupled together to form two stator half bodies 6. For each half of the coil-holding segments 5, to couple the coil-holding segments 5 together, in each coil-holding segment 5, the coil 4 is brought into contact with the surface of the first tooth portion 32 on the second tooth portion 33 side to form a gap (see FIG. 3E) between the inner side surface of the coil 4 and the surface of the first tooth portion 32 on the side opposite to the second tooth portion 33, and the second tooth portion 33 of another coil-holding segment 5 is inserted into the gap.

Finally, the two stator half bodies 6 are coupled together. Specifically, in each of the coil-holding segments 5 positioned on one ends of the two stator half bodies 6 (in FIG. 4, the upper end of the stator half body 6 on the right side and the lower end of the stator half body 6 on the left side), into the gap between the inner side surface of the coil 4 and the surface of the first tooth portion 32 on the side opposite to the second tooth portion 33, the second tooth portion 33 of a corresponding one of the coil-holding segments 5 positioned on the other ends of the two stator half bodies 6 (the upper end of the stator half body 6 on the left side and the lower end of the stator half body 6 on the right side) is inserted. The stator 1 assembled in this manner is inserted into a cylindrical casing to prevent separation of the segments 3 from one another.

The above-described assembling method makes it possible to assemble the stator 1 smoothly.

### <Variations>

The present disclosure is not limited to the above-described embodiment. Various modifications can be made without departing from the scope of the present disclosure.

For example, the teeth 21 need not be straight teeth, but may be tapered toward their tips. In other words, each tooth 21 may have a trapezoidal cross-sectional shape. In this case, both the cross sections of the covered portion 41 and the uncovered portion 42 of each coil 4 may have a rectangular shape.

As the coils 4, it is not essential to prepare air-core coils. Alternatively, strands may be wound around the teeth 21 to form the coils 4.

The length L of the rib 34 in the circumferential direction about the center axis 10 of the stator 1 may be equal to the width C of the covered portion 41 of the coil 4 on the rib 34 side or may be less than the width C. However, if the length L of the rib 34 is greater than the width C of the covered portion 41 of the coil 4 on the rib 34 side as in the above-described embodiment, then the coil 4 can be held by the ribs 34 on both sides of one tooth 21 as shown in FIG. 2.

The gap G between the ribs 34 of the respective adjacent segments 3 may be greater than the width D of the uncovered portion 42 of the coil 4 on the yoke portion 31 side. However, if the gap G between the ribs 34 is less than the width D of the uncovered portion 42 on the yoke portion 31 side as in the above-described embodiment, the amount of change in the magnetic reluctance of the ribs 34 is reduced, which makes it possible to reduce cogging torque.

### <Summary>

One aspect of the present disclosure provides, as a first mode, a stator including: a stator core including N (N is an even number) teeth; and N coils through which the respective teeth extend, wherein the stator core is divided into N segments along division lines that extend through the respective teeth, and each segment includes: an arc-shaped yoke portion; a first tooth portion and a second tooth portion that protrude inward in a radial direction from both ends of the yoke portion, respectively; and a rib that extends from a tip of the first tooth portion to a side opposite to the second tooth portion, the rib covering a part of the coil through which the tooth that is formed by the first tooth portion of the segment and the second tooth portion of an adjacent segment extends.

According to the above configuration, each segment includes the rib, which extends from the tip of the first tooth portion to the side opposite to the second tooth portion. This makes it possible to cover all the coils from the inner side of the stator in the radial direction.

As a second mode, in the first mode, the teeth may be straight teeth, and in a section plane taken in a direction orthogonal to an axial direction of the stator, a cross section of an uncovered portion of each coil, the uncovered portion being a portion in contact with the first tooth portion, may have a trapezoidal shape such that a width of the cross section of the uncovered portion in a circumferential direction about a center axis of the stator increases toward the yoke portion. According to this configuration, the ratio of occupancy by the coils in slots between the teeth, the slots each having a sector cross-sectional shape, can be increased.

As a third mode, in the second mode, in the section plane taken in the direction orthogonal to the axial direction of the stator, a cross section of a covered portion of each coil, the covered portion being a portion in contact with the second tooth portion and being covered by the rib, and the cross section of the uncovered portion of each coil may have a same area while having different shapes from each other. According to this configuration, in the case of assembling the stator by mounting the air-core coils on the respective teeth such that the teeth extend through the respective air-core coils, the cross-sectional area of each coil can be increased. As a result of the increase in the cross-sectional area of each coil, the resistance value of each coil is reduced, which makes it possible to improve motor efficiency.

As a fourth mode, in the second or third mode, a gap between the ribs of the respective adjacent segments may be less than a width of the uncovered portion on the yoke portion side. According to this configuration, the amount of change in the magnetic reluctance of the ribs is reduced, which makes it possible to reduce cogging torque.

As a fifth mode, in any one of the second to fourth modes, a length of the rib in the circumferential direction about the center axis of the stator may be greater than a width of the covered portion on the rib side. According to this configuration, the coil can be held by the ribs on both sides of one tooth.

As a sixth mode, in any of one of the first to fifth modes, the teeth may be straight teeth, and a width of the first tooth portion may be less than a width of the second tooth portion. According to this configuration, in the case of assembling the stator by mounting the air-core coils on the respective teeth such that the teeth extend through the respective air-core coils, the cross-sectional area of each coil can be increased. As a result of the increase in the cross-sectional area of each coil, the resistance value of each coil is reduced, which makes it possible to improve motor efficiency.

Another aspect of the present disclosure provides, as a seventh mode, a method of assembling a stator, the stator including: a stator core including N (N is an even number) teeth; and N coils through which the respective teeth extend, the method including preparing air-core coils as the respective coils, wherein the stator core is divided into N segments along division lines that extend through the respective teeth, and each segment includes: an arc-shaped yoke portion; a first tooth portion and a second tooth portion that protrude inward in a radial direction from both ends of the yoke portion, respectively; and a rib that extends from a tip of the first tooth portion to a side opposite to the second tooth portion, the method further including: mounting the coils on the respective first tooth portions of the segments, such that the first tooth portions extend through the respective coils, to form N coil-holding segments; coupling a half of the coil-holding segments together and another half of the coil-holding segments together to form two stator half bodies, wherein for each half of the coil-holding segments, to couple the coil-holding segments together, in each coil-holding segment, the coil is brought into contact with a surface of the first tooth portion on the second tooth portion side to form a gap between an inner side surface of the coil and a surface of the first tooth portion on a side opposite to the second tooth portion, and the second tooth portion of another coil-holding segment is inserted into the gap; and coupling the two stator half bodies together, wherein in each of the coil-holding segments positioned on one ends of the two stator half bodies, into the gap between the inner side surface of the coil and the surface of the first tooth portion on the side opposite to the second tooth portion, the second tooth portion of a corresponding one of the coil-holding segments positioned on the other ends of the two stator half bodies is inserted.

The above configuration makes it possible to assemble the stator smoothly.

## Claims

1. A stator comprising:
a stator core including N (N is an even number) teeth; and
N coils through which the respective teeth extend, wherein
the stator core is divided into N segments along division lines that extend through the respective teeth, and
each segment includes:
an arc-shaped yoke portion;
a first tooth portion and a second tooth portion that protrude inward in a radial direction from both ends of the yoke portion, respectively; and
a rib that extends from a tip of the first tooth portion to a side opposite to the second tooth portion, the rib covering a part of the coil through which the tooth that is formed by the first tooth portion of the segment and the second tooth portion of an adjacent segment extends.

2. The stator according to claim 1, wherein
the teeth are straight teeth, and
in a section plane taken in a direction orthogonal to an axial direction of the stator, a cross section of an uncovered portion of each coil, the uncovered portion being a portion in contact with the first tooth portion, has a trapezoidal shape such that a width of the cross section of the uncovered portion in a circumferential direction about a center axis of the stator increases toward the yoke portion.

3. The stator according to claim 2, wherein
in the section plane taken in the direction orthogonal to the axial direction of the stator, a cross section of a covered portion of each coil, the covered portion being a portion in contact with the second tooth portion and being covered by the rib, and the cross section of the uncovered portion of each coil have a same area while having different shapes from each other.

4. The stator according to claim 2 or 3, wherein
a gap between the ribs of the respective adjacent segments is less than a width of the uncovered portion on the yoke portion side.

5. The stator according to claim 2 or 3, wherein
a length of the rib in the circumferential direction about the center axis of the stator is greater than a width of the covered portion on the rib side.

6. The stator according to any one of claims 1 to 3, wherein
the teeth are straight teeth, and a width of the first tooth portion is less than a width of the second tooth portion.

7. A method of assembling a stator, the stator including: a stator core including N (N is an even number) teeth; and N coils through which the respective teeth extend,
the method comprising preparing air-core coils as the respective coils, wherein
the stator core is divided into N segments along division lines that extend through the respective teeth, and
each segment includes:
an arc-shaped yoke portion;
a first tooth portion and a second tooth portion that protrude inward in a radial direction from both ends of the yoke portion, respectively; and
a rib that extends from a tip of the first tooth portion to a side opposite to the second tooth portion,
the method further comprising:
mounting the coils on the respective first tooth portions of the segments, such that the first tooth portions extend through the respective coils, to form N coil-holding segments;
coupling a half of the coil-holding segments together and another half of the coil-holding segments together to form two stator half bodies, wherein for each half of the coil-holding segments, to couple the coil-holding segments together, in each coil-holding segment, the coil is brought into contact with a surface of the first tooth portion on the second tooth portion side to form a gap between an inner side surface of the coil and a surface of the first tooth portion on a side opposite to the second tooth portion, and the second tooth portion of another coil-holding segment is inserted into the gap; and
coupling the two stator half bodies together, wherein in each of the coil-holding segments positioned on one ends of the two stator half bodies, into the gap between the inner side surface of the coil and the surface of the first tooth portion on the side opposite to the second tooth portion, the second tooth portion of a corresponding one of the coil-holding segments positioned on the other ends of the two stator half bodies is inserted.
